Europäisches Patentamt

European Patent Office

Office européen des brevets

(11) Publication number : **0 610 101 A1**

# EUROPEAN PATENT APPLICATION

(21) Application number : 94300891.2

(22) Date of filing : 07.02.94

(51) Int. Cl.⁵ : **C09D 191/08,** C08L 91/08, D21H 19/18

(30) Priority : 05.02.93 US 14198

(43) Date of publication of application :
10.08.94 Bulletin 94/32

(84) Designated Contracting States :
AT BE CH DE DK ES FR GB GR IE IT LI NL PT SE

(71) Applicant : **THE MEAD CORPORATION**
**Courthouse Plaza NE**
**Dayton Ohio 45463 (US)**

(72) Inventor : **Lan, Jyh-Yee**
**4704 Belfield Drive**
**Dublin, Ohio 43017 (US)**

(74) Representative : **Hepworth, John Malcolm**
**Hepworth Lawrence Bryer & Bizley**
**Bloxam Court**
**Corporation Street**
**Rugby, Warwickshire CV21 2DU (GB)**

(54) **Recyclable wax-coated containers.**

(57)    A recyclable paperboard container coated with a wax composition having a melting point of about 130 to 160°F and a viscosity of about 10 to 200 cps at about 10°F above the melting point, and a method for recycling the containers are disclosed.

EP 0 610 101 A1

## Field of the Invention

The invention is directed to improved wax-coated containers and, more particularly, to wax-coated paperboard containers which are capable of being recycled under standard repulping conditions in a hydropulper without significantly increasing the repulping temperature or pH.

## Background of the Invention

Wax-coated containers, particularly wax-coated corrugated paperboard containers have been used for years to ship and store fresh, perishable foods such as poultry, fish and meat. Typically, the containers are packed with crushed ice to keep the food cool during shipping and storage. The wax imparts water and moisture resistance to the containers.

Examples of wax-coated or wax-impregnated paperboard containers are described in U.S. Patents 3,892,613 to McDonald et al.; 4,017,016 to Ivy; 4,126,225 to Hyland et al., and 4,948,033 to Halsell, II et al. As shown in Halsell, II et al., the paperboard may be impregnated with about 6 pounds per 1,000 square feet of a wax blend and then curtain coated with an additional 6.5 pounds per 1,000 square feet of wax blend.

Currently, wax-coated containers are not recycled for several reasons. In view of the large quantity of wax-coated containers which are used each year, it would be highly desirable to recycle the containers rather than to simply discard them. The reclamation of waste paper has been the subject of various patents and studies. For example, U.S. Patents 3,440,134 to Murphy, Jr., 4,347,009 to DeCuester et al.; 4,548,674 to Hageman et al.; and 4,737,238 to deRuvo, are related to methods for pulping waste paper and, particularly, used corrugated containers.

Several problems are inherent in recycling wax-coated containers. First, the purpose of the wax is to impart water and moisture resistance to the container and this property directly interferes with the essential property required in a recyclable container, namely, repulpability. Hence, it is necessary to remove the wax coating in the recycling process. Second, in removing the wax coating, a wax residue may remain on or contaminate the paper fibers. This residue weakens the strength of the recycled sheet because it prevents or reduces the amount of interfiber bonding such as hydrogen bonding which can be achieved in the sheet. Third, due to the high melting points of many of the waxes conventionally used in wax-coated containers, in order to remove the coating, it is necessary to modify the industry standard repulping conditions to use higher repulping temperatures. This can lead to increased energy costs which detracts from the profitability of recycling.

Presently used corrugated container boards are received at the pulping station in large bales. As a result of the difficulties involved in repulping wax-coated containers, if an inspection of the bales reveals the presence of an excessive amount of wax-containing board, the entire bale is discarded rather than repulped. While this may not represent a serious economic loss, it is certainly an important environmental concern.

In order to recycle wax-coated containers, it would be desirable to design a wax coating which can be cleanly removed from the containerboard under conventional or industry standard repulping conditions of temperature and pH. Aluminum soaps have been proposed as a substitute for wax in recyclable wax-coated containers for this purpose, and the use of aluminum soaps in combination with fatty acids has also been considered. However, a hot dispersion technique and an alkaline pH are required to remove these coatings and there remains a need for a coating which is compatible with industry practice.

## Summary of the Invention

In meeting the foregoing needs, the present invention provides a recyclable container and a coating therefor. The container is coated with a wax composition comprising (1) a wax having a melting point of about 130°F to 160°F and a viscosity of about 10 to 200 cps at 10°F above the melting point of said wax, and (2) up to about 30% by weight of a saturated or unsaturated fatty acid having about 8 to 22 carbon atoms, wherein the wax comprises a mixture of paraffins ranging from about 20 to 45 carbon atoms with at least about 60 weight percent of the paraffins ranging from about 25 to 32 carbon atoms.

The wax composition may preferably comprise a mixture of paraffins ranging from about 20 to 40 carbon atoms with at least about 60 wt. % of the paraffin waxes ranging from about 26 to 30 carbon atoms. The fatty acid may preferably be selected from the group consisting of stearic acid, palmitic acid and myristic acid, and the wax composition may contain about 10 to 30% of the fatty acid.

The invention also provides a method for recycling corrugated paperboard container coated with a wax composition comprising (1) a wax having a melting point of about 130 to 160°F and a viscosity of about 10 to 200 cps at 10°F, above the melting point of said wax, and (2) up to about 30% by weight of a saturated or unsaturated fatty acid having about 8 to 22 carbon atoms, wherein said wax comprises a mixture of paraffins ranging from about 20 to 45 carbon atoms with at least about 60 weight percent of said paraffins ranging from about 25 to 32 carbon atoms. The method comprises repulping the wax-coated container in a hydropulper at a temperature of about 130 to 160°F and a pH of less than about 8.0.

Detailed Description of the Invention

The containers of the invention are designed primarily for use in shipping and storing perishable food items such as poultry, meat and fish. The present invention is principally directed to wax-coated containers prepared from paperboard. However, those skilled in the art will appreciate that the invention may be useful in preparing any wax-coated paper product where ease of recyclability is desired including milk containers. The containers of the present invention are conventional with the exception of the wax coating.

The wax used in the present invention is characterized as having a melting point of about 130 to 160°F and preferably about 140°F, a viscosity of about 10 to 200 and preferably about 20 cps at 10°F above the melting point and is preferably ash-free, i.e., they contain little or no fillers. The wax is preferably further characterized as comprising a mixture of paraffins ranging from about 20 to 45 carbon atoms and preferably about 20 to 40 carbon atoms with at least about 60 wt. % of the mixture containing waxes having about 25 to 32 carbon atoms and more preferably 26 to 30 carbon atoms. Suitable waxes include Ecco Wax 244 commercially available from Eastern Color and Chemical Company, Providence, RI, and Boler Wax 1977. A particularly preferred wax is Ecco Wax 244. The wax may be used alone but it is preferably used in combination with a fatty acid.

The fatty acid is believed to function as a wax-compatible soap precursor which forms a salt of the fatty acid upon the addition of a base such as an alkali or alkaline earth metal hydroxide or salt to adjust the pH during the repulping of the corrugated paperboard containers in the hydropulper. It is theorized that some of the wax used in carrying out the invention when used in conjunction with the fatty acid during repulping produces small wax particles which become interspersed among the fibers and acts as an internal sizing agent in the recycled sheet. It is further theorized that other conventional waxes which fall outside the above characterization description provide larger particles which may interfere with fiber-to-fiber bonding or hydrogen bonding and therefore reduce the strength of the repulped product.

Useful fatty acids are those saturated or unsaturated fatty acids having about 8 to 22 carbon atoms. Examples of fatty acids useful in the invention include stearic acid, palmitic acid, myristic acid, lauric acid, capric acid, caprylic acid, arachidic acid, behenic acid, oleic acid, linoleic acid, etc. The preferred fatty acids include stearic acid, palmitic acid and myristic acid.

The amount of the fatty acid will vary with the amount of water resistance desired in the product and its repulpability. The upper limit on the amount of fatty acid contained in the wax composition is dependent upon the water resistance desired. As the concentration of the fatty acid increases the water resistance of the coating tends to be reduced. For most applications, the wax composition may contain up to about 30% fatty acid, preferably about 10 to 25% and most preferably about 10 to 20%.

Paperboard is made up of two sheets of liner board having a corrugated media sandwiched therebetween. In preparing a wax-coated container, the corrugated media is usually impregnated with the wax composition by immersing the media in a bath of the melted wax and the liner board is usually coated on one or both sides with the wax composition. Previously, wax coatings have typically been applied to the liner board by a curtain coater, however, due to the low viscosity of the wax composition of the present invention, it may be preferred to use a spray coating technique. Spray coating may enable coating of both sides simultaneously and also enable the use of lesser amounts of the coating thereby providing an economical advantage over the prior art coatings. Additives which increase the viscosity of the wax may also be employed if it is desired to use curtain coating. Typically, the present wax-containing composition is applied at an average amount of about 5 pounds per 1,000 square feet. More precisely, the internal corrugated media is impregnated with the wax composition at a coat weight of about 3 to 5 pounds per 1,000 square feet and the interior liner of the corrugated media is generally coated with the wax composition at a coat weight of about 5 to 6 pounds of wax composition per 1,000 square feet. The coat weight is typically a function of a cost versus water-resistance balance.

The wax composition used in the present invention in coating the corrugated paperboard containers is especially attractive because, unlike prior waxes, it allows the wax-coated container to be recycled using a hydropulper at standard pulping conditions which include a temperature of about 130 to 160°F and a near neutral pH (e.g., 6.5 to 7.5). Any alkaline pH can be used to repulp the container, however, for compatibility with industrial operations a pH of less than about 8.0 is preferred and a pH of less than about 7.0 is most preferred. Excellent results have been achieved with a wax composition of Ecco Wax 244 and stearic acid at a pH of 6.5. Removal of the wax is evident when the repulping water turns milky.

The invention is illustrated in more detail by the following non-limiting examples.

3

Example 1

Two sheets of liner board were coated using a preheated #2 Meyer rod with compositions containing 80% Ecco Wax 244 and 20% stearic acid, and 100% Ecco Wax 244, respectively. The compositions were allowed to set and then evaluated for the properties shown in Table 1. WVTR, compressive strength, and handsheet strength were measured in a conventional manner.

Boat soak was evaluated by accurately cutting and weighing an 8 inch square sample from the liner board. The sample was then scored 1 1/2 inches from the four edges as well as diagonally from the corners to the scores, folded into a bellows tray, placed in water and then filled with 1 inch of water. After 72 hours, the sample was removed and a 4" x 4" specimen was cut, using a template, from the bottom of the boat and weighed to determine the % water pick-up.

**Table 1**

| Test | WVTR | Boat Soak | Wicking | Oil Test | Compressive Strength | | Fiber Ret. (%) | | | Cleanness | | Handsheet Strength |
|---|---|---|---|---|---|---|---|---|---|---|---|---|
| System | (g/100 sq. in/24 h) | (g/4 sq. in/72 h) | (24 h) | (72 h) | MD | CD | Water | 15 Min. | 30 Min. | BS-15 | AS-15 | (Nm/g) |
| Target Value | < 0.1 | 0.7 | Pass | Few pin holes | 116 | 99 | White | > 80 | > 90 | Clean | Clean | 29.2 |
| Ecco Wax | 0.03 | 0.9 | Pass | Soak-in after 1 day | -- | 101 | White | 80 | 93 | Clean | Clean | 22.1 |
| Ecco Wax/Fatty Acid | 0.06 | 0.7 | Pass | Soak-in after 1 day | -- | 100 | White | 87 | 96 | Clean | Clean | 30.1 |

Wicking was evaluated by immersing one end of the combined board in water for 24 hours and measuring the wicking action of the board. Wicking of more than about 1/8 inch in 24 hours indicates that problems with box performance can be expected. Oil was evaluated by placing oil on the surface of the coated board and visually determining the ability of the coating to retard penetration.

Cleanness was evaluated by sandwiching each of the hand sheets between two sheets of blotter paper and heating to 250°F. The surface of the sheets were then visually inspected for wax deposits.

The results are shown in Table 1 where they are also compared with a set of desired or targeted values.

It will be recognized by those skilled in the art that changes may be made to the above-described embodiments of the invention without departing from the broad inventive concepts thereof. It is understood, therefore, that this invention is not limited to the particular embodiments disclosed, but it is intended to cover all modifications which are within the scope and spirit of the invention as defined by the appended claims.

## Claims

1. A wax composition for coating material for forming containers or other paperboard articles, said wax composition comprising a wax having a melting point of substantially in the range 130°F to 160°F (55 - 71°C) and a viscosity substantially in the range 10 to 200 cps at 10°F (5.55°C) above the melting point of said wax, and up to substantially 30% by weight of a saturated or unsaturated fatty acid having about 8 to 22 carbon atoms, wherein said wax comprises a mixture of paraffins ranging from about 20 to 45 carbon atoms with at least about 60 weight percent of said paraffins ranging from about 25 to 32 carbon atoms.

2. The wax composition of claim 1 further comprising a mixture of paraffins ranging from about 20 to 40 carbon atoms with at least about 60 wt. % of said paraffin waxes ranging from about 26 to 30 carbon atoms.

3. The wax composition of claim 1 or claim 2 wherein said fatty acid is selected from stearic acid, palmitic acid and myristic acid.

4. The wax composition of any of the preceding claims wherein said wax composition contains about 10 to 30% of said fatty acid.

5. The wax composition of any of the preceding claims wherein said wax has a melting point of about 140°F (60°C) and a viscosity of about 20 cps at 10°F (5.55°C) above its melting point.

6. A recyclable paperboard contained wherein at least some panels of said container are coated with the wax composition of any of claims 1 to 5.

7. The container of claim 6 wherein said container is repulpable in a hydropulper at about 130 to 160°F (55 - 71°C) and a pH less than 8.

8. The container of claim 7 wherein said pH is less than about 7.

9. The recyclable container of any of claims 6 to 8 wherein said container is a corrugated paperboard container.

10. The container of claim 9 wherein the liner of said paperboard is coated with said wax composition at a coat weight of about 3 to 6 pounds per 1,000 square feet (14.6 - 29.3 g/m$^2$).

11. The container of claim 9 or claim 10 wherein the corrugated media of said paperboard is impregnated with said wax composition in an amount of about 2 to 5 pounds per 1,000 square feet (9.8 - 24.4 g/m$^2$).

12. A method of recycling a corrugated paperboard container coated with a wax composition comprising a wax having a melting point substantially in the range 130 - 160°F (55 - 71°C) and a viscosity substantially in the range 10 to 200 cps at 10°F (5.55°C) above the melting point of said wax, and up to substantially 30% by weight of a saturated or unsaturated fatty acid having about 8 to 22 carbon atoms, wherein said wax comprises a mixture of paraffins ranging from about 20 to 45 carbon atoms with at least about 60 weight percent of said paraffins ranging from 25 to 32 carbon atoms, comprising repulping said wax-coated container in a hydropulper at a temperature substantially in the range 130 to 160°F (55 - 71°C) and a pH of less than substantially 8.

13. The method of claim 12 wherein said wax-coated container is repulped in the presence of an alkali or alkaline earth metal hydroxide or salt to convert said fatty acid to a soap, said soap being capable of emulsifying said wax.

14. The use of a wax composition of any of claims 1 to 5 to facilitate the repulping of a wax-coated container or other wax-coated paperboard article whose coating comprises such a composition.

15. A method of making a wax-coated paperboard container repulpable in a hydropulper at a temperature substantially in the range 130 to 160°F (55 - 71°C) and pH of less than about 8, comprising applying to the container or material for forming it a composition of any one of claims 1 to 5 as the wax coating.

EP 0 610 101 A1

European Patent Office

**EUROPEAN SEARCH REPORT**

Application Number
EP 94 30 0891

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-3 001 963 (HIGGINS, F. J.)<br>* column 1, line 37 - line 41; claims 1-4 * | 1-4 | C09D191/08<br>C08L91/08<br>D21H19/18 |
| A | WO-A-91 05107 (MICHELMAN)<br><br>* claims 1,5,8,12-14,23 * | 1,6-8,<br>12,14 | |

TECHNICAL FIELDS
SEARCHED        (Int.Cl.5)

C09D
C08L
D21H

The present search report has been drawn up for all claims

| Place of search | Date of completion of the search | Examiner |
|---|---|---|
| THE HAGUE | 28 April 1994 | Beyss, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8